# EUROPÄISCHE PATENTSCHRIFT

(11) **EP 3 624 959 B1**
(45) Veröffentlichungstag und Bekanntmachung des Hinweises auf die Patenterteilung: **04.10.2023**
(21) Anmeldenummer: 18725227.5
(22) Anmeldetag: 17.05.2018
(51) Int. Cl.: B08B 5/00, B29B 17/02, B08B 9/28, B08B 6/00, B29C 71/00, B29C 71/04

(54) **BERÜHRUNGSFREIE REINIGUNGSVORRICHTUNG**
CONTACTLESS CLEANING DEVICE
DISPOSITIF DE NETTOYAGE SANS CONTACT

(30) Priorität: 17.05.2017 DE 102017208329
(43) Veröffentlichungstag der Anmeldung: 25.03.2020
(73) Patentinhaber: EJOT SE & Co. KG, 57319 Bad Berleburg (DE)
(72) Erfinder: DÖRNBACH, Mathias, 57339 Erndtebrück (DE)
(74) Vertreter: Bardehle Pagenberg Partnerschaft mbB Patentanwälte Rechtsanwälte
(86) Internationale Anmeldenummer: PCT/EP2018/062887
(87) Internationale Veröffentlichungsnummer: WO 2018/211005

(56) Entgegenhaltungen:
- EP-A2- 0 316 622
- EP-A2- 1 661 634
- DE-A1-102013 105 141
- US-A- 4 631 124
- US-A- 5 265 298

## Beschreibung

Die vorliegende Erfindung betrifft eine berührungsfreie Reinigungsvorrichtung, insbesondere eine Reinigungsvorrichtung zum Entfernen von statisch anhaftenden Partikeln auf einem Werkstück sowie ein entsprechendes Verfahren.

Bei der Produktion von Werkstücken, insbesondere bei solchen aus Kunststoff, kommt es durch die Produktionsbedingungen oder durch Bearbeitung des Werkstückes innerhalb des Produktionsprozesses, beispielsweise durch Fräsen oder Reiben des Werkstückes, immer wieder dazu, dass sich Partikel auf der Oberfläche des herzustellenden oder zu bearbeitenden Werkstückes absetzen. Diese Partikel trüben nicht nur das Erscheinungsbild eines fertigen Produktes, sondern können auch für weitere Verarbeitungsschritte hinderlich sein, zum Beispiel, wenn das Werkstück lackiert werden soll etc. Es ist auch denkbar, dass derart feine Werkstücke hergestellt oder bearbeitet werden, bei denen durch die anhaftenden Partikel selbst bereits die Funktionsweise des Werkstückes behindert wird, beispielsweise wenn das Werkstück Teil einer Feinmechanik bildet.

Um diese Partikel von der Oberfläche des Werkstückes zu entfernen, werden die Werkstücke daher üblicherweise mit Druckluft abgesprüht, so dass die Partikel von der Oberfläche abgeblasen werden, wie beispielsweise in den Dokumenten US 4,631,124 A, EP 0 316 622 A2, US 5,265,298 A und DE 10 2013 105141 A1 gezeigt. Damit sich auch die statisch auf der Oberfläche des Werkstückes anhaftenden Partikel lösen, wird zumeist in der Nähe der Austrittsdüse für die Druckluft ein Ionisator angeordnet, der mittels Hochspannung zur partiellen Ionisierung der Druckluft führt. Wird diese ionisierte Druckluft direkt auf die Oberfläche des Werkstückes geblasen, so wird die Oberfläche des Werkstückes elektrostatisch entladen und die statisch anhaftenden Partikel können abgeblasen werden.

Dieses Abblasen der Partikel hat zwar den Vorteil, dass die Oberfläche des Werkstückes von Partikeln befreit wird, führt aber dazu, dass die Partikel in der Umgebung verteilt werden und sich anschließend wieder auf dem Werkstück absetzen können. Ein weiterer Nachteil ergibt sich beispielsweise in einer Reinraumumgebung. Werden die Partikel hier in der Umgebung verteilt, so wird der Reinraum konterminiert.

Es stellt sich daher die Aufgabe eine Vorrichtung und ein Verfahren bereitzustellen, die die oben genannten Nachteile nicht aufweisen und mit denen eine einfache berührungsfreie Reinigung eines Werkstückes möglich ist ohne dass hierzu komplexe und kostenintensive Aufbauten nötig sind und die eine Konterminierung der Umgebung vermeiden. Des Weiteren stellt sich die Aufgabe eine Vorrichtung bereitzustellen, die einfach an unterschiedliche Werkstücke angepasst werden kann. Diese Aufgabe wird erfindungsgemäß durch eine Vorrichtung zur berührungsfreien Reinigung eines Werkstückes gelöst, wobei die Vorrichtung aufweist, ein Gehäuse, welches einen ersten Bereich und einen zweiten Bereich aufweist. Das Gehäuse umschließt einen definierten Raum und ist innen hohl. Der erste Bereich des Gehäuses weist eine erste Öffnung auf. Der zweite Bereich weist zumindest eine zweite Öffnung auf und ist angepasst an eine Unterdruckquelle angeschlossen zu werden. D.h. es kann in dem Gehäuse ein Luftstrom erzeugt werden, der von der ersten Öffnung zur zweiten Öffnung durch das Gehäuse beziehungsweise durch das hohle Innere verläuft. Dieser Luftstrom wird dadurch erzeugt, dass die Unterdruckquelle Luft an der zweiten Öffnung des Gehäuses ansaugt und Luft an der ersten Öffnung nachströmt. Der Fachmann wird verstehen, dass auch wenn hier von Luft gesprochen wird, ein Strom des Mediums erzeugt wird in der die erfindungsgemäße Vorrichtung verwendet wird. Wird die erfindungsgemäße Vorrichtung beispielsweise unter einer Schutzgasatmosphäre verwendet, so wird ein Strom des Schutzgases erzeugt. Allgemein kann auch gesagt werden, dass ein Strom des Mediums erzeugt wird, in der die Vorrichtung verwendet wird.

Als Unterdruckquelle dient ein Gebläse, welches mittels eines Ventilators einen Medienstrom erzeugt, der derart gerichtet ist, dass dieser das Medium aus der zweiten Öffnung des Gehäuses heraussaugt. Diese Seite des Gebläses kann also als Unterdruckquelle bezeichnet werden. Die andere Seite des Gebläses, dort wo dieses Luft hinausbläst kann als Überdruckquelle bezeichnet werden. Das Gebläse saugt dabei aus einer ersten zweiten Öffnung der Vorrichtung Luft ab und bläst diese durch eine zweite zweite Öffnung wieder in die Vorrichtung, so dass der Luftstrom erhöht wird. Dabei sind beispielsweise Luftumsätze von 200 bis 250 qm / Stunde möglich. Erfindungsgemäß kann an oder in der Nähe der ersten Öffnung zumindest ein Ionisator angeordnet sein, der mittels anschließbarer Hochspannung Ionen emittieren kann, die die an dem Ionisator vorbeiströmende Luft oder das vorbeiströmende Medium zumindest partiell ionisieren können.

Die erste Öffnung weist eine Form und Größe auf, so dass das zu reinigende Werkstück zumindest teilweise aufgenommen werden kann. Bevorzugt ist die Öffnung derart ausgestaltet, dass das Werkstück zumindest teilweise in das Gehäuse also in das innere hohle des Gehäuses eingeführt werden kann. Dabei kann die Form und Größe der ersten Öffnung beispielsweise ca. 10 mm größer sein als das zu reinigende Werkstück. Dieser Wert hat sich als besonders geeignet gezeigt, um eventuelle Reflektionen des Medienstroms zu verhindern, so dass es nicht zu einer sekundären Verunreinigung des Werkstückes kommt.

Durch den Luftstrom, der an dem Werkstück vorbeiströmt werden auf der Oberfläche des Werkstückes anhaftende Partikel abgelöst. Diese werden in Richtung der Unterdruckquelle abgesaugt und gelangen so nicht in die Umgebung. Durch den ionisierten Luftstrom wird die Oberfläche des Werkstückes statisch neutralisiert, so dass auch statisch anhaftende Partikel gelöst werden und abgesaugt werden können. Die erfindungsgemäße Vorrichtung hat somit den Vorteil, dass eine einfache Reinigung eines Werkstückes möglich ist, ohne dass dabei die Umgebung konterminiert wird. Ein weiterer Vorteil der erfindungsgemäßen Vorrichtung liegt darin begründet, dass keine Druckluft verwendet wird, um das Werkstück zu reinigen, d.h. es werden auch keine Öl- oder Kondensationsabscheider benötigt, die für die Druckluftreinigung unabdingbar sind.

In der erfindungsgemäßen Vorrichtung weist das Gehäuse einen ersten Hohlkörper und einen zweiten Hohlkörper auf, wobei der zweite Hohlkörper den ersten Hohlkörper zumindest teilweise umgibt. Dabei kann das Gehäuse beispielsweise ein Koaxialrohr sein, also ein Rohr im Rohr, wobei der erste Hohlkörper durch das innere Rohr gebildet wird und der zweite Hohlkörper durch das das innere Rohr umgebende äußere Rohr. Dabei können beide Rohre eine gemeinsame erste Öffnung der Vorrichtung bilden und jedes Rohr für sich kann jeweils eine zweite Öffnung der Vorrichtung bilden. Es wird vom Fachmann verstanden werden, dass auch wenn hier von Rohren gesprochen wird, die genannten Hohlkörper eine beliebige Geometrie haben können, also beispielsweise eckig oder oval ausgestaltet sein können.

Zwischen den beiden Hohlkörpern besteht eine Verbindung in Form zumindest einer Düse. Diese zumindest eine Düse erlaubt einen Medienfluss zwischen dem ersten und zweiten Hohlkörper. Der zweite Hohlkörper wird an ein Gebläse angeschlossen, so dass ein Medienstrom erzeugt wird in dem ersten Hohlkörper. Da der erste Hohlkörper an einer Unterdruckquelle angeschlossen ist, wird der sowieso bereits bestehende Medienstrom nochmals verstärkt. Der zweite Hohlkörper ist an ein Gebläse mit Ansaugfilter angeschlossen wobei die Ansaugung dieses Gebläses an dem ersten Hohlkörper angeschlossen ist. Durch den erzeugten Medienstrom, der durch den Ionisator ionisiert wird, wird die Oberfläche des Werkstückes neutralisiert und anhaftende Partikel werden abgeblasen.

Alternativ ist es aber auch möglich, dass auch der zweite Hohlkörper an eine Unterdruckquelle angeschlossen wird und das Medium abgesaugt wird. Entsprechend wird über die zumindest eine Düse das Medium aus dem ersten Hohlkörper abgesaugt. Hierzu ist der zweite Hohlkörper, d.h. der den ersten Hohlkörper umgebende Hohlkörper, beispielsweise nur an der der Unterdruckquelle zugewandten Seite geöffnet, so dass das Medium zwingend durch die zumindest eine Düse aus dem ersten Hohlkörper gesaugt werden muss. Es ist dabei möglich, dass beide Hohlkörper an die gleiche Unterdruckquelle angeschlossen werden. Es ist aber auch möglich, dass die beiden Hohlkörper an unterschiedliche Unterdruckquellen angeschlossen werden, die beispielsweise unterschiedliche Saugwirkungen haben.

In beiden Fällen kann die zumindest eine Düse angepasst sein, den Medienfluss zwischen dem ersten und zweiten Hohlkörper zu steuern. Beispielsweise kann die Ausrichtung der zumindest einen Düse einstellbar sein. Dieses Einstellen kann manuell oder automatisch geschehen. Des Weiteren ist es auch möglich, dass die zumindest eine Düse in Form und Größe verändert werden kann, so dass der Medienstrom gezielt eingestellt werden kann. Auch hier ist eine manuelle oder automatische Einstellung möglich. Es können auch eine Vielzahl von Düsen zwischen dem ersten und zweiten Hohlkörper ausgebildet sein. Diese können beispielsweise auch je nach Anwendungsfall austauschbar sein, so dass der Medienstrom beispielsweise an die Geometrie des zu reinigenden Werkstückes angepasst werden kann. Es kann beispielsweise auch bei Einführung des Werkstückes in die erste Öffnung des Gehäuses, also in den ersten Hohlraum zu einer berührungsfreien Abtastung des Werkstückes kommen und die zumindest eine Düse kann entsprechend automatisch derart eingestellt werden, dass diese einen optimalen Medienstrom passend zur Geometrie des Werkstückes erzeugt. Wenn die Geometrie des Werkstückes bekannt ist, ist es auch möglich, dass die zumindest eine Düse und deren Einstellmechanismus derart eingestellt ist, dass eine automatische Einstellung der zumindest einen Düse basierend auf der Einführtiefe des Werkstückes in den ersten Hohlkörper geschieht. Im einfachsten Fall kann die zumindest eine Düse aber auch fest eingestellt sein und es reicht aus, wenn diese nur dann ausgetauscht wird, wenn sich die Geometrie des zu reinigenden Werkstückes ändert.

In einer weiteren bevorzugten Ausführungsform der erfindungsgemäßen Vorrichtung weist die zweite Öffnung zumindest einen Filter auf. Dieser zumindest eine Filter kann direkt in der Öffnung angeordnet sein oder kann in der Nähe der Unterdruckquelle angeordnet sein. Dieser Filter kann die abgeblasenen Partikel aufnehmen, so dass diese durch die Unterdruckquelle nicht in die Umgebung abgegeben werden. Der zumindest eine Filter kann auswechselbar sein. Dem Fachmann ist auch bewusst, dass nicht nur ein Filter eingesetzt werden kann, sondern eine Mehrzahl von Filtern, die beispielsweise unterschiedlich große Partikel filtern.

In einer weiteren bevorzugten Ausführungsform der erfindungsgemäßen Vorrichtung weist der Ionisator eine Mehrzahl von Ionisationsspitzen auf. Diese Ionisationsspitzen können auch als Emitterspitzen bezeichnet werden und mit einer Hochspannungsquelle verbunden sein. Die Ionisationsspitzen können beispielsweise umfänglich an oder in der ersten Öffnung des Gehäuses angeordnet sein. Eine derartige Anordnung von Ionisationsspitzen kann auch als Ionisierungskranz oder Ionisierungsring bezeichnet werden. Dabei können alle Ionisationsspitzen gleich geladene Ionen emittieren oder unterschiedliche Ionisationsspitzen können unterschiedlich geladene Ionen emittieren. Dies sorgt dafür, dass verschiedenen Oberflächenladungsprofilen Rechnung getragen werden kann, d.h. bedingt dadurch, dass Ionen beider Polaritäten emittiert werden können, kann die statische Aufladung neutralisiert werden und die statische Anhaftung von Partikeln beseitigt werden. Dabei können beispielsweise Ionisationsspitzen emittierend positive Ionen mit Ionisationsspitzen emittierend negative Ionen alternierend an der ersten Öffnung des Gehäuses angeordnet sein. Es ist beispielsweise auch möglich, dass zwei Ionisierungskränze versetzt zueinander angeordnet sind, wobei jeweils ein Ionisierungskranz Ionen einer bestimmten Polarität emittiert.

In einer weiteren bevorzugten Ausführungsform der erfindungsgemäßen Vorrichtung ist die erste Öffnung im Gehäuse in Form und / oder Größe an das zu reinigende Werkstück angepasst, so dass dieses in das Gehäuse eingeführt werden kann. Die erste Öffnung kann beispielsweise auch derart angepasst sein, dass diese in Form und / oder Größe einstellbar ist und je nach einzuführendem Werkstück verändert werden kann. Diese Einstellung kann manuell oder automatisch geschehen. Die Geometrie bzw. Form der ersten Öffnung und / oder des gesamten Gehäuses der Vorrichtung kann dabei beispielsweise ca. 10 mm größer sein als die Außenkontur des zu reinigenden Werkstückes.

In einer weiteren bevorzugten Ausführungsform der erfindungsgemäßen Vorrichtung weist diese weiter ein Haltemittel auf zum Halten des zu reinigenden Werkstückes. Beispielsweise kann dieses Haltemittel das Werkstück in einer bestimmten Position innerhalb der ersten Öffnung im Gehäuse halten. Es ist auch möglich, dass das Haltemittel das Werkstück hält und zumindest teilweise in der ersten Öffnung also zumindest teilweise in dem Gehäuse der Vorrichtung bewegt. Dabei kann das Haltemittel beispielsweise auch eine Drehung des Werkstückes innerhalb der Öffnung bzw. innerhalb des Gehäuses bewirken, so dass der Luftstrom die gesamte Oberfläche des Werkstückes optimal umströmen kann und entsprechende anhaftende Partikel entfernt werden.

In einer weiteren bevorzugten Ausführungsform der Vorrichtung weist diese weiter ein Begrenzungsmittel auf, das verhindert, dass das Werkstück zu tief in das Gehäuse eingeführt wird oder durch die Unterdruckquelle angesaugt wird.

Beispielsweise weist das Gehäuse im inneren ein Gitter auf, welches derart ausgestaltet ist, dass es das Werkstück zurückhält, sollte dies von der Unterdruckquelle angesaugt werden.

In einer weiteren bevorzugten Ausführungsform der Vorrichtung wird das zu reinigende Werkstück in die erste Öffnung eingeführt und an der zweiten Öffnung wieder entnommen. Dabei kann das zu reinigende Werkstück entweder durch ein Mittel zwangsgeführt werden oder sich Schwerkraft bedingt bewegen. Im letzteren Fall kann auch gesagt werden, dass das zu reinigende Werkstück durch die Vorrichtung fällt und beim Fallen gereinigt wird.

In einer weiteren bevorzugten Ausführungsform der erfindungsgemäßen Vorrichtung weist das Gehäuse zumindest eine weitere Öffnung auf, durch die ein weiteres Medium ins Gehäuse geleitet werden kann. Dieses weitere Medium kann sich beispielsweise von dem Medium unterscheiden, welches durchs Gehäuse gesaugt wird. Dieses weitere Medium kann beispielsweise ein Reinigungsmedium sein.

In einer weiteren bevorzugten Ausführungsform der Vorrichtung weist die Vorrichtung zumindest einen Drucksensor oder Luftmengenmesser im Bereich der ersten Öffnung auf, der mit einer Steuerung verbunden ist. Die Steuerung ist in der Lage basierend auf den gemessenen Werten zumindest die Unterdruckquelle zu steuern sowie falls vorhanden die angeschlossene Überdruckquelle.

In einer weiteren bevorzugten Ausführungsform können mehrere Vorrichtung kaskadenartig hintereinander angeordnet sein. Hierbei können die Vorrichtungen entweder direkt hintereinander angeordnet sein, d.h. die zumindest eine zweite Öffnung der ersten Vorrichtung ist verbunden mit der ersten Öffnung der zweiten Vorrichtung usw., oder die Vorrichtungen können im Abstand zueinander angeordnet sein. Das zu reinigende Werkstück kann dabei durch alle hintereinander angeordneten Vorrichtungen bewegt werden oder fallen, so dass unterschiedliche Grade an Verunreinigung beseitigt werden können.

Die oben genannte Aufgabe wird auch gelöst durch ein erfindungsgemäßes Verfahren zum berührungsfreien Reinigen eines Werkstückes. Das erfindungsgemäße Verfahren weist auf, zumindest teilweises Einführen des zu reinigenden Werkstückes in ein Gehäuse, durch eine erste Öffnung in dem Gehäuse, Erzeugen eines Luftstroms in dem Gehäuse zwischen der ersten Öffnung im Gehäuse und einer zweiten Öffnung im Gehäuse durch Anschließen der zweiten Öffnung an eine Unterdruckquelle und Emittieren von Ionen in den Luftstrom. Dabei können die Ionen durch einen Ionisator emittiert werden, der an oder in der ersten Öffnung im Gehäuse angeordnet ist und der mit einer Hochspannungsquelle verbunden ist.

In einer weiteren bevorzugten Ausführungsform des erfindungsgemäßen Verfahrens weist das Verfahren weiter auf, das Bewegen des zu reinigenden Werkstückes in dem erzeugten Luftstrom. Dieses Bewegen des Werkstückes kann beispielswiese durch ein Haltemittel bewerkstelligt werden, welches das zu reinigende Werkstück innerhalb der ersten Öffnung bzw. innerhalb des Gehäuses dreht, so dass der Luftstrom das Werkstück optimal umschließen kann und die auf der Oberfläche anhaftenden Partikel abgeblasen werden können. Das zu reinigende Werkstück kann beispielsweise auch durch die Vorrichtung bewegt werden, d.h. von der ersten Öffnung zur zumindest einen zweiten Öffnung. Es ist auch denkbar, dass sich das zu reinigende Werkstück Schwerkraft bedingt durch die Vorrichtung bewegt.

In einer weiteren bevorzugten Ausführungsform des Verfahrens weist das Verfahren weiter auf, die Entnahme des Werkstückes aus der ersten Öffnung nach Abschluss des Reinigungsvorgangs. D.h. das Werkstück wird aus der gleichen Öffnung wieder entnommen aus der es eingeführt wurde. Dies hat den Vorteil, dass das Werkstück nicht in Richtung der abgeblasenen Partikel bewegt wird, so dass nicht die Gefahr besteht, dass es zur erneuten Verschmutzung kommt.

Die Erfindung wird nachfolgend anhand eines in den beigefügten Figuren dargestellten Ausführungsbeispiels näher erläutert. Aus dem beschriebenen Ausführungsbeispiel ergeben sich weitere Einzelheiten, Merkmale und Vorteile des Gegenstands der Erfindung. Es zeigen:
- Fig. 1: eine Ansicht eines Ausführungsbeispiels einer erfindungsgemäßen Vorrichtung; und
- Fig. 2: einen Vertikalschnitt durch das in Fig. 1 gezeigte Ausführungsbeispiel der erfindungsgemäßen Vorrichtung.

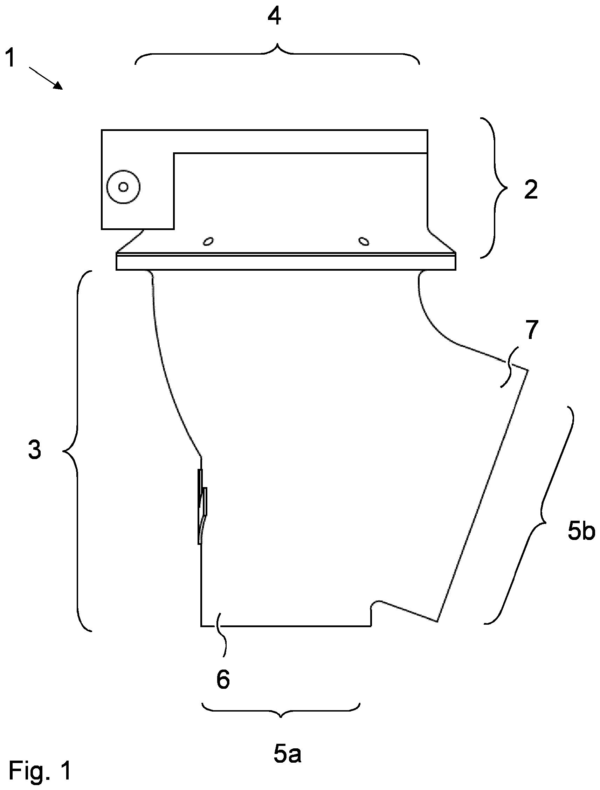

Figur 1 zeigt ein Ausführungsbeispiel einer erfindungsgemäßen Vorrichtung 1. In dem hier gezeigten Ausführungsbeispiel weist die Vorrichtung 1 einen koaxialrohrförmigen Aufbau auf. D.h. die Vorrichtung 1 besteht aus einem inneren Rohr 6, welches eine erste Öffnung 4 aufweist, die sich im hier gezeigten Ausführungsbeispiel im ersten Bereich 2 der Vorrichtung 1 befindet sowie eine zweite Öffnung 5a, die sich im hier gezeigten Ausführungsbeispiel im zweiten Bereich 3 der Vorrichtung 1 befindet. Zwischen der ersten Öffnung 4 und der zweiten Öffnung 5a besteht die Möglichkeit des Medienflusses. In dem hier gezeigten Ausführungsbeispiel weist die Vorrichtung 1 des Weiteren ein zweites Rohr 7 auf, welches das erste Rohr 6 zumindest teilweise umgibt. Es kann auch davon gesprochen werden, dass das erste Rohr 6 das innere Rohr ist und das zweite Rohr 7 das äußere Rohr. Das zweite Rohr 7 hat im zweiten Bereich 3 der Vorrichtung 1 eine Öffnung 5b und ist in dem hier gezeigten Ausführungsbeispiel im inneren mit dem ersten Rohr 6 verbunden, so dass die Möglichkeit des Medienflusses zwischen der ersten Öffnung 4 und der Öffnung 5b besteht. An die Öffnung 5b kann ein Gebläse angeschlossen werden, so dass ein Medium vom äußeren Rohr 7 in das innere Rohr 6 geblasen werden kann, wodurch ein Medienstrom innerhalb der Vorrichtung 1 bzw. im inneren Rohr 6 gebildet wird. Alternativ ist es aber auch möglich, dass an die Öffnung 5b eine Unterdruckquelle angeschlossen wird, die das Medium in der die Vorrichtung 1 zum Einsatz kommt durch die Öffnung 4 ansaugt, wodurch auch ein Medienstrom innerhalb des inneren Rohres 6 gebildet wird. Wird ein zu reinigendes Werkstück nun durch die erste Öffnung 4 in das innere Rohr 6 bewegt, so wird dieses Werkstück von dem erzeugten Medienstrom umströmt. Hierdurch werden anhaftende Partikel abgeblasen und bewegen sich in Richtung der zweiten Öffnung 5a des inneren Rohres 6. An diese Öffnung 5a kann eine Unterdruckquelle angeschlossen werden, die die abgeblasenen Partikel absaugt. In einer Ausführung der in Figur 1 gezeigten Vorrichtung 1, kann ein einziges Gebläse - hier nicht gezeigt - verwendet werden, dessen Ansaugung mit der Öffnung 5a unter Zwischenschaltung eines Filters - hier nicht gezeigt - verbunden ist und dessen Ausblasung mit der Öffnung 5b verbunden ist.

Um auch statisch anhaftende Partikel von dem Werkstück zu lösen, kann in oder an der ersten Öffnung 4 ein Ionisator - hier nicht gezeigt - angeordnet sein, der mittels Hochspannung Ionen emittiert, die zur Neutralisierung der Oberflächenladung des Werkstückes führen, so dass die ansonsten statisch anhaftenden Partikel abgeblasen werden können.

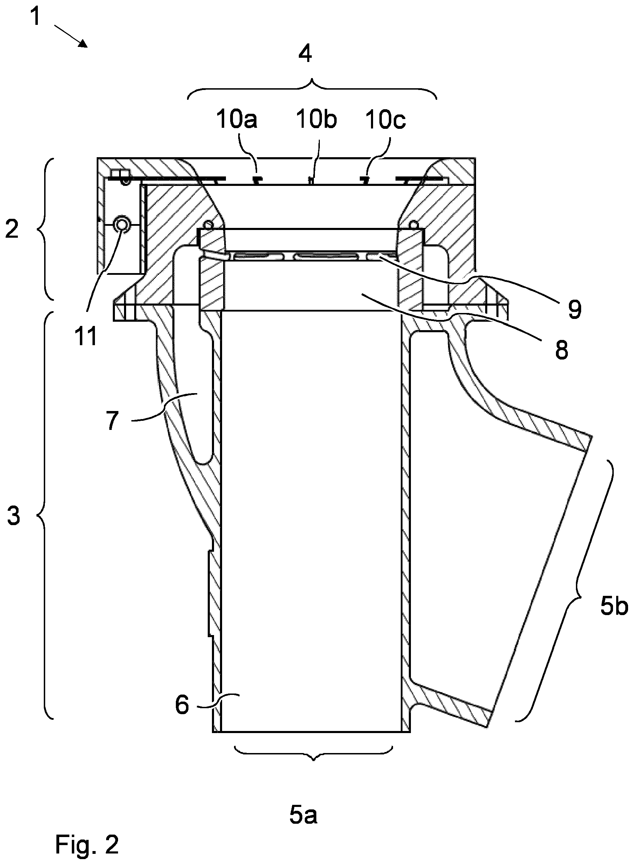

Figur 2 zeigt einen Vertikalschnitt durch das in Figur 1 gezeigte Ausführungsbeispiel der erfindungsgemäßen Vorrichtung 1. In dem hier gezeigten Ausführungsbeispiel wird das innere Rohr 6 zumindest teilweise von dem äußeren Rohr 7 umgeben. Zwischen dem ersten und zweiten Rohr 6, 7 ist in dem hier gezeigten Ausführungsbeispiel im Bereich 2 der Vorrichtung 1 ein Düsenring 8 angeordnet, der in dem hier gezeigten Ausführungsbeispiel mehrere Düsen 9 aufweist. Wird an die Öffnung 5b des äußeren Rohres 7 beispielsweise ein Gebläse angeschlossen, so wird ein Medium in der die Vorrichtung 1 zum Einsatz kommt - beispielsweise Luft - durch die Düsen 9 geblasen. Es entsteht somit ein Medienstrom zwischen der Düse 9 und dem äußeren Rohr 7. Durch den Bernoulli Effekt wird von diesem Medienstrom auch durch die erste Öffnung 4 das Medium angesaugt, so dass ein Medienstrom zwischen der ersten Öffnung 4 und der Öffnung 5b entsteht. Zusätzlich kann auch an die Öffnung 5a eine Unterdruckquelle angeschlossen werden. Alternativ ist es auch möglich, dass an das äußere Rohr an Öffnung 5b eine Unterdruckquelle angeschlossen wird, so dass ein Medium in der die Vorrichtung 1 zum Einsatz kommt - beispielsweise Luft - durch die erste Öffnung 4 durch die Düsen 9 im Düsenring 8 in das äußere Rohr 7 gesaugt wird. Es entsteht auch hier ein Medienstrom zwischen der ersten Öffnung 4 und der Öffnung 5a in dem inneren Rohr 6. Dieser kann ebenfalls verstärkt werden, wenn an die Öffnung 5b eine Unterdruckquelle angeschlossen wird.

In dem hier gezeigten Ausführungsbeispiel ist die erste Öffnung 4 trichterförmig ausgestaltet, um den Medienstrom zu begünstigen. Durch die Ausrichtung, die Form und / oder die Größe der Düsen 9 lässt sich der Medienstrom derart steuern, dass eine gleichmäßige Verteilung auftritt und der Medienstrom konusförmig ist. Wird nun ein zu reinigendes Werkstück in die erste Öffnung 4 bewegt, so umgibt der konusförmige Medienstrom das Werkstück und anhaftende Partikel werden gelöst und werden durch die an die Öffnung 5a angeschlossene Unterdruckquelle abgesaugt.

Damit aber auch statisch anhaftende Partikel gelöst werden können, weist die Vorrichtung 1 in diesem Ausführungsbeispiel umfänglich an der ersten Öffnung 4 Ionisationsspitzen 10a, 10b, 10c auf, die einen Ionisator 10 bilden. Der Ionisator 10 ist dabei über einen Anschluss 11 mit einer Hochspannungsquelle verbindbar. Durch die Hochspannung werden an den Ionisationsspitzen 10a, 10b, 10c Ionen erzeugt, die in der Lage sind die statische Aufladung des Werkstückes zu neutralisieren. Die von den Ionisationsspitzen 10a, 10b, 10c emittierten Ionen werden über den erzeugten Medienstrom mitgeführt in das innere Rohr 6 und können dort auf das einzuführende Werkstück treffen, wo die entsprechende Neutralisierung stattfindet.

Es wird vom Fachmann verstanden werden, dass das gezeigte Ausführungsbeispiel nur beispielhaft ist und alle gezeigten Elemente, Mittel, Bauteile, und Merkmale verschieden ausgestaltet sein können, aber dennoch die hier beschriebenen Grundfunktionalitäten erfüllen können.

## Patentansprüche

1. Eine Vorrichtung (1) zur berührungsfreien Reinigung eines Werkstückes, die Vorrichtung aufweisend:
ein Gehäuse, wobei das Gehäuse einen ersten Hohlkörper (6) und einen zweiten Hohlkörper (7) aufweist, wobei der zweite Hohlkörper (7) den ersten Hohlkörper (6) zumindest teilweise umgibt, wobei der erste Hohlkörper (6) in einem ersten Bereich (2) des Gehäuses eine erste Öffnung (4) aufweist sowie zumindest einen in oder an der ersten Öffnung (4) angeordneten Ionisator (10), wobei die erste Öffnung (4) angepasst ist das zu reinigende Werkstück zumindest teilweise aufzunehmen, und in einem zweiten Bereich (3) des Gehäuses eine zweite Öffnung (5a) aufweist, die angepasst ist an eine Unterdruckquelle angeschlossen zu werden;
zumindest eine Düse (9) zwischen dem ersten Hohlkörper (6) und dem zweiten Hohlkörper (7) für einen Medienfluss zwischen dem ersten und zweiten Hohlkörper (6, 7); und
ein Gebläse dessen Ansaugung unter Zwischenschaltung eines Filters mit der zweiten Öffnung (5a) des ersten Hohlkörpers (6) verbunden ist, dessen Ausblasung mit einer zweiten Öffnung (5b) des zweiten Hohlkörpers (7) verbunden ist und welches mittels eines Ventilators einen Luftstrom erzeugt.

2. Die Vorrichtung (1) nach Anspruch 1, wobei die Düse (9) angepasst ist den Medienfluss zwischen dem ersten und zweiten Hohlkörper (6, 7) zu steuern.

3. Die Vorrichtung (1) nach einem der vorhergehenden Ansprüche, wobei die zweite Öffnung (5a) des ersten Hohlkörpers (6) oder die zweite Öffnung (5b) des zweiten Hohlkörpers (7) zumindest einen Filter aufweist.

4. Die Vorrichtung (1) nach einem der vorhergehenden Ansprüche, wobei der Ionisator (10) eine Mehrzahl von Ionisationsspitzen (10a, 10b, 10c) aufweist, die umfänglich an oder in der ersten Öffnung (4) angeordnet sind.

5. Die Vorrichtung (1) nach Anspruch 4, wobei die Ionisationsspitzen (10a, 10b, 10c) angepasst sind unterschiedlich geladene Ionen zu emittieren.

6. Die Vorrichtung (1) nach einem der vorhergehenden Ansprüche, weiter aufweisend:
eine Hochspannungsquelle verbunden mit dem Ionisator (10).

7. Die Vorrichtung (1) nach einem der vorhergehenden Ansprüche, wobei die erste Öffnung (4) ausgestaltet ist in Form und / oder Größe an das zu reinigende Werkstück angepasst zu werden.

8. Die Vorrichtung (1) nach einem der vorhergehenden Ansprüche, weiter aufweisend:
ein Haltemittel zum Halten des zu reinigenden Werkstückes.

9. Die Vorrichtung (1) nach einem der vorherigen Ansprüche, wobei das Gehäuse zumindest eine weitere Öffnung aufweist, durch die ein weiteres Medium ins Gehäuse geleitet werden kann.

10. Ein Verfahren zum berührungsfreien Reinigen eines Werkstückes, das Verfahren aufweisend:
zumindest teilweises Einführen des zu reinigenden Werkstückes in ein Gehäuse, durch eine erste Öffnung (4) in dem Gehäuse, wobei das Gehäuse einen ersten Hohlkörper (6) und einen zweiten Hohlkörper (7) aufweist,
wobei der zweite Hohlkörper (7) den ersten Hohlkörper (6) zumindest teilweise umgibt, wobei der erste Hohlkörper (6) in einem ersten Bereich (2) des Gehäuses die erste Öffnung (4) aufweist sowie zumindest einen in oder an der ersten Öffnung (4) angeordneten Ionisator (10), wobei die erste Öffnung (4) angepasst ist das zu reinigende Werkstück zumindest teilweise aufzunehmen und in einem zweiten Bereich (3) des Gehäuses eine zweite Öffnung (5a) aufweist, die angepasst ist an eine Unterdruckquelle angeschlossen zu werden und zumindest eine Düse (9) zwischen dem ersten Hohlkörper (6) und dem zweiten Hohlkörper (7) für einen Medienfluss zwischen dem ersten und zweiten Hohlkörper (6, 7);
Erzeugen eines Luftstroms in dem Gehäuse zwischen der ersten Öffnung (4) im Gehäuse und der zweiten Öffnung (5a) des ersten Hohlkörpers (6) durch Anschließen der zweiten Öffnung (5a) des ersten Hohlkörpers (6) unter Zwischenschaltung eines Filters an eine Ansaugung eines Gebläses und durch Anschließen einer zweiten Öffnung (5b) des zweiten Hohlkörpers (7) an eine Ausblasung des Gebläses, wobei das Gebläse den Luftstrom mittels eines Ventilators erzeugt; und
Emittieren von Ionen in den Luftstrom.

11. Das Verfahren nach Anspruch 10, weiter aufweisend:
Bewegen des zu reinigenden Werkstückes in dem erzeugten Luftstrom.

## Claims

1. An apparatus (1) for contactless cleaning of a workpiece, the apparatus comprising:
a housing, wherein the housing comprises a first hollow body (6) and a second hollow body (7), wherein the second hollow body (7) at least partially surrounds the first hollow body (6), wherein the first hollow body (6) comprises a first opening (4) in a first region (2) of the housing and at least one ionizer (10) arranged in or at the first opening (4), wherein the first opening (4) is adapted to at least partially receive the workpiece to be cleaned, and comprises a second opening (5a) in a second region (3) of the housing, which is adapted to be connected to a vacuum source;
at least one nozzle (9) between the first hollow body (6) and the second hollow body (7) for a media flow between the first and second hollow bodies (6, 7); and
a blower, the intake of which is connected to the second opening (5a) of the first hollow body (6) with the interposition of a filter, the exhaust of which is connected to a second opening (5b) of the second hollow body (7) and which generates an air flow by means of a fan.

2. The apparatus (1) according to claim 1, wherein the nozzle (9) is adapted to control the media flow between the first and second hollow bodies (6, 7).

3. The apparatus (1) according to one of the preceding claims, wherein the second opening (5a) of the first hollow body (6) or the second opening (5b) of the second hollow body (7) comprises at least one filter.

4. The apparatus (1) according to one of the preceding claims, wherein the ionizer (10) comprises a plurality of ionization tips (10a, 10b, 10c) arranged circumferentially at or in the first opening (4).

5. The apparatus (1) according to claim 4, wherein the ionization tips (10a, 10b, 10c) are adapted to emit differently charged ions.

6. The apparatus (1) according to one of the preceding claims, further comprising:
a high voltage source connected to the ionizer (10).

7. The apparatus (1) according to one of the preceding claims, wherein the first opening (4) is configured to be adapted in shape and/or size to the workpiece to be cleaned.

8. The apparatus (1) according to one of the preceding claims, further comprising:
a holding means for holding the workpiece to be cleaned.

9. The apparatus (1) according to one of the preceding claims, wherein the housing comprises at least one further opening through which a further medium can be guided into the housing.

10. A method for contactless cleaning of a workpiece, the method comprising:
at least partially introducing the workpiece to be cleaned into a housing, through a first opening (4) in the housing, wherein the housing comprises a first hollow body (6) and a second hollow body (7), wherein the second hollow body (7) at least partially surrounds the first hollow body (6),
wherein the first hollow body (6) comprises the first opening (4) in a first region (2) of the housing and at least one ionizer (10) arranged in or at the first opening (4), wherein the first opening (4) is adapted to at least partially receive the workpiece to be cleaned, and comprises a second opening (5a) in a second region (3) of the housing, which is adapted to be connected to a vacuum source, and at least one nozzle (9) between the first hollow body (6) and the second hollow body (7) for a media flow between the first and second hollow bodies (6, 7);
generating an air flow in the housing between the first opening (4) in the housing and the second opening (5a) of the first hollow body (6) by connecting the second opening (5a) of the first hollow body (6) to an intake of a blower with the interposition of a filter and by connecting a second opening (5b) of the second hollow body (7) to an exhaust of the blower, wherein the blower generates the air flow by means of a fan; and
emitting ions into the air flow.

11. The method according to claim 10, further comprising:
moving the workpiece to be cleaned in the generated air flow.

## Revendications

1. Dispositif (1) pour le nettoyage sans contact d'une pièce à usiner, le dispositif comprenant :
un boîtier, dans lequel le boîtier comporte un premier corps creux (6) et un second corps creux (7), dans lequel le second corps creux (7) entoure au moins partiellement le premier corps creux (6), dans lequel le premier corps creux (6) comporte dans une première zone (2) du boîtier une première ouverture (4) ainsi qu'au moins un ioniseur (10) agencé dans ou au niveau de la première ouverture (4), dans lequel la première ouverture (4) est adaptée afin de recevoir comporte moins partiellement la pièce à usiner à nettoyer, et comporte dans une seconde zone (3) du boîtier une seconde ouverture (5a) qui est adaptée afin d'être raccordée à une source de dépression ;
au moins une buse (9) entre le premier corps creux (6) et le second corps creux (7) pour un flux de fluide entre le premier et second corps creux (6, 7) ; et
une soufflante, dont l'aspiration est reliée en intercalant un filtre à la seconde ouverture (5a) du premier corps creux (6), dont le soufflage est relié à une seconde ouverture (5b) du second corps creux (7) et qui génère un courant d'air au moyen d'un ventilateur.

2. Dispositif (1) selon la revendication 1, dans lequel la buse (9) est adaptée afin de commander le flux de fluide entre le premier et second corps creux (6, 7).

3. Dispositif (1) selon l'une des revendications précédentes, dans lequel la seconde ouverture (5a) du premier corps creux (6) ou la seconde ouverture (5b) du second corps creux (7) comporte au moins un filtre.

4. Dispositif (1) selon l'une des revendications précédentes, dans lequel l'ioniseur (10) comporte une pluralité de pointes d'ionisation (10a, 10b, 10c) qui sont agencées sur la périphérie au niveau ou dans la première ouverture (4).

5. Dispositif (1) selon la revendication 4, dans lequel les pointes d'ionisation (10a, 10b, 10c) sont adaptées pour émettre des ions chargés différemment.

6. Dispositif (1) selon l'une des revendications précédentes, comprenant en outre : une source de haute tension reliée à l'ioniseur (10).

7. Dispositif (1) selon l'une des revendications précédentes, dans lequel la première ouverture (4) est configurée afin d'être adaptée en forme et/ou en taille à la pièce à usiner à nettoyer.

8. Dispositif (1) selon l'une des revendications précédentes, comprenant en outre :
un moyen de retenue pour la retenue de la pièce à usiner à nettoyer.

9. Dispositif (1) selon l'une des revendications précédentes, dans lequel le boîtier comporte au moins une autre ouverture, par laquelle un autre fluide peut être acheminé dans le boîtier.

10. Procédé de nettoyage sans contact d'une pièce à usiner, le procédé comprenant :
l'introduction au moins partielle de la pièce à usiner à nettoyer dans un boîtier, par une première ouverture (4) dans le boîtier, dans lequel le boîtier comporte un premier corps creux (6) et un second corps creux (7), dans lequel le second corps creux (7) entoure au moins partiellement le premier corps creux (6), dans lequel le premier corps creux (6) comporte dans une première zone (2) du boîtier la première ouverture (4) ainsi qu'au moins un ioniseur (10) agencé dans ou au niveau de la première ouverture (4), dans lequel la première ouverture (4) est adaptée afin de recevoir au moins partiellement la pièce à usiner à nettoyer et comporte dans une seconde zone (3) du boîtier une seconde ouverture (5a) qui est adaptée afin d'être raccordée à une source de dépression et au moins une buse (9) entre le premier corps creux (6) et le second corps creux (7) pour un flux de fluide entre le premier et second corps creux (6, 7) ;
la génération d'un courant d'air dans le boîtier entre la première ouverture (4) dans le boîtier et la seconde ouverture (5a) du premier corps creux (6) par raccordement de la seconde ouverture (5a) du premier corps creux (6) en intercalant un filtre à une aspiration d'une soufflante et par raccordement d'une seconde ouverture (5b) du second corps creux (7) à un soufflage de la soufflante, dans lequel la soufflante génère le courant d'air au moyen d'un ventilateur ; et
l'émission d'ions dans le courant d'air.

11. Procédé selon la revendication 10, comprenant en outre :
le déplacement de la pièce à usiner à nettoyer dans le courant d'air généré.
